# EUROPEAN PATENT SPECIFICATION

(11) **EP 2 122 736 B1**
(45) Date of publication and mention of the grant of the patent: **20.11.2013**
(21) Application number: 08723838.2
(22) Date of filing: 29.02.2008
(51) Int. Cl.: H01M 8/22, H01M 14/00

(54) **IMPROVED DEVICE FOR PERFORMING A REVERSE ELECTRODIALYSIS PROCESS, AND IMPROVED METHODS FOR PERFORMING A REVERSE ELECTRODIALYSIS PROCESS**
VERBESSERTE EINRICHTUNG ZUM DURCHFÜHREN EINES RÜCKWÄRTS-ELEKTRODIALYSEPROZESSES UND VERBESSERTE VERFAHREN ZUM DURCHFÜHREN EINES RÜCKWÄRTS-ELEKTRODIALYSEPROZESSES
DISPOSITIF AMÉLIORÉ POUR EFFECTUER UN PROCÉDÉ D'ÉLECTRODIALYSE INVERSE, ET PROCÉDÉS AMÉLIORÉS POUR EFFECTUER UN PROCÉDÉ D'ÉLECTRODIALYSE INVERSE

(30) Priority: 05.03.2007 NL 1033494
(43) Date of publication of application: 25.11.2009
(73) Proprietor: Redstack B.V., 8606 JR Sneek (NL)
(72) Inventor: POST, Jan, Willem, NL-3871 JK Hoevelaken (NL); HAMELERS, Hubertus, Victor, Marie, NL-6866 BX Heelsum (NL)
(74) Representative: Verdijck, Gerardus
(86) International application number: PCT/NL2008/000066
(87) International publication number: WO 2008/108633

(56) References cited:
- NL-A- 9 200 205
- LACEY R.E.: "Energy by reverse electrodialysis" OCEAN ENERGY, vol. 7, 1980, pages 1-47, XP002437777
- TUREK ET AL: "Renewable energy by reverse electrodialysis" DESALINATION, ELSEVIER, AMSTERDAM, NL, vol. 205, no. 1-3, 31 January 2007 (2007-01-31), pages 67-74, XP005868712 ISSN: 0011-9164
- POST ET AL: "Salinity-gradient power: Evaluation of pressure-retared osmosis and reverse electrodialysis" JOURNAL OF MEMBRANE SCIENCE, vol. 288, 23 November 2006 (2006-11-23), pages 218-230, XP002437778 Amsterdam

## Description

According to a first aspect, the present invention relates to an improved device for performing a reverse electrodialysis process.

According to a further aspect, the invention relates to an improved method for generating electric energy, wherein use is made of the device according to the invention.

NL 9 200 205 discloses a method and device for purifying a fluid flow. The flow is separated into a first sub-flow containing ions and a second sub-flow containing heavy metals.

Electrodialysis is a process which is applied for, among other purposes, the production of drinking water from saltwater or brackish water. In this process a number of anion and cation exchange membranes are placed alternately between an anode and cathode. If a supply flow with saltwater or brackish water is pumped through the compartments formed between the anion and cation exchange membrane, no controlled displacement of ions between the compartments takes place as long as no voltage is applied between the anode and cathode. If however a voltage is applied between the anode and cathode, the positive ions then tend to move toward the cathode, while the negative ions will tend to move toward the anode. The negative ions cannot however pass through the cation exchange membranes and the positive ions: cannot pass through the anion exchange membranes. The result hereof is that the initially identical supply flows change into alternately concentrated and diluted electrolyte solutions.

The above described electrodialysis process can be reversed in order to generate electric energy. This principle of electricity generation using reverse, electrodialysis was already described in 1955 in GB 731729. In reverse electrodialysis, or Blue energy, a number of anion and cation exchange membranes are thus also placed alternately between an anode and cathode. However, the compartments formed between the anion and cation exchange membrane are now charged with alternate concentrated and diluted electrolyte solutions, such as saltwater or brackish water and freshwater. A unit of an anion exchange membrane and a cation exchange membrane, one of which separates a concentrated and a diluted electrolyte solution and the other of which shields one of the electrolyte solutions on the other side, is referred to as a dialytic cell.

As a result of the differences in concentration between the concentrated and diluted electrolyte solutions, ions will want to move from high to low concentrations in order to equalize the concentrations. Anions cannot however pass through the cation exchange membranes and are only allowed through the anion exchange membranes. Cations can only pass through the cation exchange membranes.

Due to this limitation in the freedom of movement of cations and anions, a net transport of cations and anions will take place in opposite directions. A prerequisite for this ion transport in opposite directions is that the electric neutrality of the solutions is maintained. This takes place in the dialytic cell because, at the moment a cation enters or exits, an anion exits or enters. In the outer compartments however, where the electrodes are placed, this is not possible. In these electrode compartments the electric neutrality is maintained because oxidative dissociation of water takes place at the anode and reductive dissociation at the cathode. Acid or base is formed here. It is also possible that electrolytes, such as Cl⁻, take part in oxidation or reduction reactions. By electrically connecting the anode and cathode electrons can run from the anode to the cathode, thereby creating an electric current.

The reactions which take place in the anode and cathode compartments can be represented as follows:
Anode reaction(s):

   (1) H₂O -> ½ O₂ + 2 H⁺ + 2e⁻ (-1.23 V)

   (2) 2 Cl⁻ -> Cl₂ (g) + 2e- (-1.36 V)
Cathode reaction:

   (3) 2 H_{2O} + 2 e⁻ → H₂(g) + 2 OH⁻ (-0.83 V)

In usual devices for reverse electrodialysis it has now been found that, if the diluted electrolyte solutions comprise multivalent ions in addition to monovalent ions, net transport of multivalent ions can occur in the direction opposed to the concentration gradient. Multivalent cations and multivalent anions herein move from the diluted electrolyte solution to the concentrated electrolyte solution. As far as the inventors of the present invention are aware, this phenomenon has not been described earlier in the field of reverse electrodialysis and related fields.

The composition of saltwater (from seas or oceans) and freshwater (from rivers or lakes) is generally such that during use thereof in a reverse electrodialysis device the now discovered reverse transport of multivalent ions can occur.

The reverse transport of multivalent ions has a negative effect on the electric current generated in a device for a reverse electrodialysis reaction. Experiments have shown that, if the reverse transport of multivalent ions is reduced by about 95%, the electrical potential over the dialytic cell can be improved by more than 10-20%, and that as a result the electric power of a device for reverse electrodialysis can be improved by 20-40% (since W=IR=U²/R).

The present invention has for its object to prevent reverse transport of multivalent ions. The invention provides for this purpose a device according to claim 1.

The device according to the invention can be applied to perform a reverse electrodialysis reaction. The skilled person will appreciate the basic requirements with which such a device must comply.

The device according to the invention comprises a number of anode compartments provided with an anode placed in an anode fluid, and a number of cathode compartments separated from the anode compartments and provided with a cathode placed in a cathode fluid. The anode and cathode compartments are therefore suitable for holding the anode and cathode fluid. In the context of the present invention the term fluid includes all media in which low-molecular molecules and/or ions (Mw < 300 Da) can undergo diffusion movement, including a gel in which the diffusion movement can be limited to some extent. The fluid perfectly comprises an aqueous medium, including a,gel on water basis. In this application a number is understood to mean at least one.

The anode and cathode are manufactured from appropriate materials. The choice of appropriate materials for the anode and cathode lies within the reach of the knowledge of the skilled person. It is for instance possible to opt for carbon or another conductive material. The use of carbon is particularly recommended because of the good electrical conduction, the favourable cost price and chemical inertia of this material.

The anode and cathode compartments are separated from each other by a number of cation and anion exchange membranes which are placed alternately between the cathode and anode. Cation and anion exchange membranes are known in this field. With the exception of a number of specific embodiments, the present invention makes no particular requirements of the cation and anion exchange membranes that are applied, in addition to the requirements for a correct operation of a reverse electrodialysis device. These are namely that a cation exchange membrane substantially does not allow passage of anions and an anion exchange membrane substantially does not allow passage of cations. It is also recommended that anion and cation exchange membranes substantially do not allow passage of water.

Examples of suitable anion exchange membranes are Aciplex A201 (Asahi Chemical industry Co., Japan), Selemion ASV (Asahi Glass Co. Ltd, Japan), FAS (Fuma-tech, GMBH, Germany), AR204szra (Ionics Inc, United States of America), Neosepta AM-1 (Tokuyama Co., Japan), Ralex AMH-PES (Mega, Czech Republic).

Examples of suitable cation exchange membrane are Aciplex K-501SB (Asahi Chemical Industry Co., Japan), Nafiin N-117 (DuPont Co., US), FKS (FuMA-Tech GmbH, Germany), Neosepta CMX (Tokuyama Co., Japan), Ralex CM-PES (Mega, Czech Republic).

Because the principal requirement is that the cation and anion exchange membranes are placed alternately between the cathode and anode, the number of cation exchange membranes can be greater than the number of anion exchange membranes. Alternatively, the number of anion exchange membranes can be greater than the number of cation exchange membranes. Since it is also necessary here to fulfil the requirement that the cation and anion exchanged membranes are present in alternating manner, the number of cation and anion exchange membranes will differ by a maximum of one.

Compartments, the electrolyte compartments, are formed between the cation and anion exchange membranes. These electrolyte compartments are alternately filled with low osmotic electrolyte solutions with relatively low electrolyte concentrations and high osmotic electrolyte solutions with electrolyte concentrations higher than the low osmotic electrolyte solutions. The term electrolyte solution is understood to mean a solution of a number of positively and negatively ionized chemical species. Each cation or anion exchange membrane thus separates an electrolyte solution with a high electrolyte concentration from an electrolyte solution with a low electrolyte concentration. It should be appreciated that high and low are relative terms. It is also the relative ratio of the electrolyte concentrations in two adjacent electrolyte compartments which produces the driving force behind the ion transport.

An electrolyte solution can thus be deemed, depending on the comparative solution to which it is compared, to have a high electrolyte concentration under determined conditions and a low electrolyte concentration under other conditions. Brackish water can thus have a high electrolyte concentration compared to freshwater. Compared to saltwater however, it can have a low electrolyte concentration. Saltwater can further have a low electrolyte concentration compared to saltwater concentrates, for instance obtained from electrodialysis processes for the purpose of drinking water production.

Bearing the above in mind, suitable sources of electrolyte solutions with a high electrolyte concentration can be chosen from saltwater, for instance from seas or oceans; brackish water, for instance from river estuaries; saltwater concentrates, for instance obtained from electrodialysis processes. Electrolyte solutions with a low electrolyte concentration can be chosen from freshwater, for instance from lakes or rivers; saltwater, for instance from seas or oceans; or brackish water, for instance from river estuaries; saltwater concentrates, for instance obtained from electrodialysis processes. The electrolyte solutions with high and low electrolyte concentrations are preferably guided in a continuous flow through the electrolyte compartments.

The device according to the invention is characterized in that it comprises means for limiting transport of multivalent ions of low-osmotic electrolyte solutions to the high-osmotic electrolyte solutions. This reverse transport of multivalent ions is limited at least in the electrically uncharged state of the device for reverse electrodialysis. The potential available for the production of current is hereby increased. A favourable effect can already be obtained here when the reverse transport is limited in at least a part of the device.

Suitable means which can be adapted to limit transport of multivalent ions will be known to the skilled person. The skilled person can, broadly speaking, envisage two options, i.e. removal of multivalent ions from the low-osmotic electrolyte solutions, or adapting the cation and anion exchange membranes are such that transport of multivalent ions from the low-osmotic electrolyte solutions to the high-osmotic electrolyte solutions is limited. Within the scope of the present invention multivalent ions are intended to mean ions with a multiple charge, such as anions with a multiple negative charge, or cations with a multiple positive charge. Examples of multivalent anions are SO₄²⁻, HPO₄²⁻, PO₄³⁻. Examples of multivalent cations are Mg²⁺ and Ca²+.

According to a preferred embodiment the means for limiting transport of multivalent ions from the low-osmotic electrolyte solutions to the high-osmotic electrolyte solutions are formed by embodying a number of cation exchange membranes and a number of anion exchange membranes as monovalent-selective membranes. Monovalent-selective membranes allowing selective passage of respectively monovalent anions and monovalent cations are known in the field and are commercially available. Examples of anion exchange membranes which are selective for monovalent anions and allow only very limited passage of multivalent anions are for instance Aciplex A-192 (Asahi Chemical Industry Co. Japan) and Neosepta Acs (Tokuyama Co. Japan). Examples of cation exchange membranes which are selective for monovalent cations and allow only very limited passage of multivalent cations are for instance Aciplex K-192 (Asahi Chemical Industry Co. Japan) and Neosepta CMS (Tokuyama Co. Japan). These monovalent-specific anion and cation exchange membranes generally have a selectivity higher than 90% for monovalent ions. That is, 90% of the ions (anions or cations) allowed through are monovalent ions. Such a high selectivity of the monovalent-selective membranes is desirable for the present invention, though not essential. A selectivity of more than 60%, preferably more than 70%, such as more than 80%, already provides for an improvement in the cell voltage and the power of a reverse electrodialysis installation.

As already stated above, the reverse transport of multivalent ions and the potential-decreasing effect thereof can also be limited by removing the multivalent ions from the low-osmotic electrolyte solutions. As will be apparent to the skilled person, this can be done in different ways. Multivalent ions can for instance be deposited as poorly soluble salts. Calcium can for instance thus be deposited as the hydroxide salt by adding sodium hydroxide (solution).

The forming of poorly soluble salts does however require chemical additions to electrolyte solutions. This can entail high costs and can also have an environmental impact.

The invention therefore provides according to a preferred embodiment an alternative device, wherein the means for removing the multivalent ions comprise anion and/or cation exchange resins. Anion exchange resins are here able to exchange monovalent anions bonded thereto for multivalent anions. Cation exchange resins are able here to exchange monovalent cations bonded thereto for multivalent cations. Owing to the exchange of monovalent anions or monovalent cations for multivalent anions and multivalent cations respectively, the concentration of multivalent ions in the low-osmotic electrolyte solutions is decreased and the concentration of monovalent ions is increased. Owing to the lower concentration thereof, the multivalent ions can transfer to a lesser extent to the high-osmotic electrolyte solution.

The anion and/or cation exchange resins can be placed in the electrolyte compartments in which low-osmotic electrolyte solutions are present. It is recommended here that both anion and cation exchange resins are present, and that these anion and cation exchange resins are mixed together.

It is however also possible for anion and/or cation exchange resins to be placed in the inflow of low-osmotic electrolyte solutions to electrolyte compartments. It is also recommended here that both anion and cation exchange resins are used. It is however possible, in the inflow of low-osmotic electrolyte solution to electrolyte compartments, to place the anion exchange resins in a compartment separate from cation exchange resins. In the compartment comprising anion exchange resins the multivalent anions are first exchanged for monovalent anions, and subsequently or previously, multivalent cations are exchanged for monovalent cations in a compartment comprising cation exchange resins. The final inflow of low-osmotic electrolyte solutions to electrolyte compartments will hereby comprise a lower concentration of multivalent ions, whereby these can penetrate to lesser extent to the electrolyte compartments comprising high-osmotic electrolyte solutions as compared to the original low-osmotic electrolyte solution.

The invention further relates to a method for generating electric energy. The method comprises the steps of:
(I) providing a device according to the invention;
(ii) allowing the low-osmotic electrolyte solutions and the high-osmotic electrolyte solutions to flow through the electrolyte compartments;
(iii) electrically connecting the anode and the cathode.

During the use of the device according to the invention electric energy will be generated due to the electrical connection of the anode and the cathode, whereby a process of reverse electrodialysis can take place.

A preferred embodiment of the method according to the invention relates to the regenerating of the anion and/or cation exchange resins which can be applied in the device according to the invention. As the skilled person will appreciate, the anion and/or cation exchange resins will at a given moment be saturated with multivalent anions and/or multivalent cations. Regeneration of the anion and/or cation exchange resins will therefore be desirable at a given moment. During this regeneration multivalent anions bonded to the anion exchange resins will be exchanged for monovalent anions. For the cation exchange resins the same will take place in respect of multivalent cations which are bonded thereto and exchanged for monovalent cations. Regeneration of anion exchange resins can take place by supplying a solution with a high content of monovalent anions, such as a sodium chloride solution or sodium hydroxide solution. Regeneration of a cation exchange resin can take place by supplying a solution with a high content of monovalent cations, such as a sodium chloride solution or a hydrochloric acid solution.

According to a preferred embodiment of the invention, the anion and/or cation exchange resins are regenerated by bringing them into contact with a high-osmotic electrolyte solution. A high-osmotic electrolyte solution will generally comprise a high content of monovalent anions and/or monovalent cations. This is at any rate the case for water from seas and/or oceans. Regeneration in this manner results in less of an environmental impact than the use of added solutions such as NaCl, HCl or NaOH solutions.

The regeneration of the anion and/or cation exchange resins in this manner can take place in simple manner by reversing the flow of the high-osmotic electrolyte solutions and the low-osmotic electrolyte solutions, so that low-osmotic electrolyte solutions now flow through compartments through which high-osmotic electrolyte solutions previously flowed, and vice versa. If anion and/or cation exchange resins are present in the electrolyte compartments, is thus recommended that these anion and/or cation exchange resins are present in both compartments comprising high-osmotic electrolyte solutions and compartments comprising low-osmotic electrolyte solutions. In the electrolyte compartments comprising low-osmotic electrolyte solutions the anion and/or cation exchange resins will fulfil a function in respect of the bonding of respectively multivalent anions and multivalent cations. In the electrolyte compartments comprising high-osmotic electrolyte solutions the anion and/or cation exchange resins will be regenerated.

The invention is further elucidated on the basis of the following figures. These figures are intended only by way of illustration of the invention, and are not intended to limit the scope of the invention as defined in the claims.
Figure 1 shows a schematic overview of an embodiment of a device according to the invention for performing a reverse electrodialysis process;
Figure 2 shows a schematic overview of a further embodiment of a device according to the invention for performing a reverse electrodialysis process;
Figure 3 is a schematic representation of the processes which occur during exchange of ions on a cation exchange resin and an anion exchange resin;
Figure 4 shows schematically a further embodiment of the device according to the invention;
Figure 5 shows the progression of the concentration of diverse ions in time during an experiment, wherein normal membranes and monovalent-selective membranes are applied; and
Figure 6 shows the progression in the apparent selectivity and the open circuit potential of a reverse electrodialysis device with normal membranes and monovalent-selective membranes.

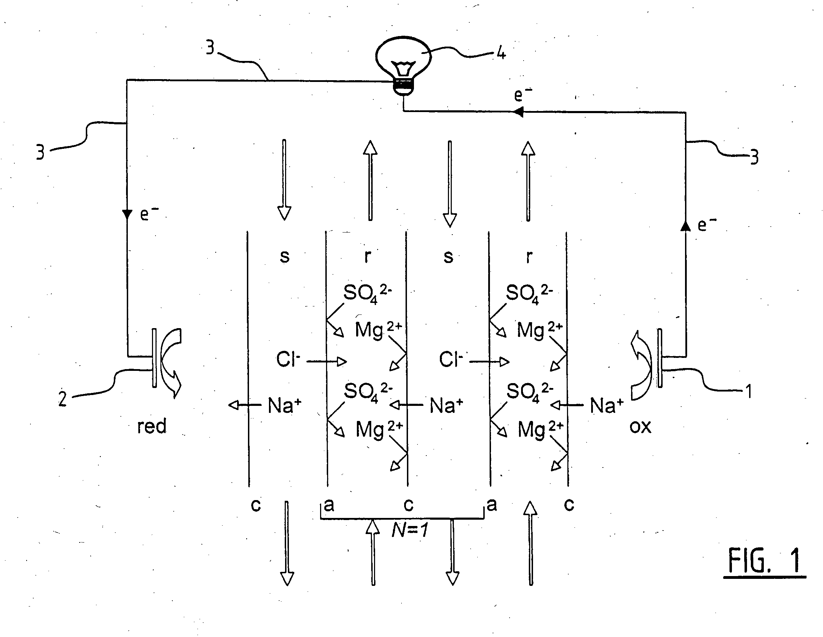

Figure 1 shows a schematic overview of an embodiment of the device according to the invention. As shown in figure 1, a number of anion exchange membranes (a) and cation exchange membranes (c) are placed between anode (1) and cathode (2). These are embodied as monovalent-specific anion and cation exchange membranes respectively. Formed between the anion exchange membranes (a) and cation exchange membranes(c) are electrolyte compartments in which seawater (s) and river-water(r) alternately flow. Owing to the differences in concentration of electrolytes in the seawater (s) and river-water (r), the electrolytes in the seawater (s) will want to move toward the river-water (r) in order to equalize the concentrations. Due to the alternating placing of the anion exchange membranes (a) and cation exchange membranes (c), net transport of cations to the cathode and of anions to the anode will hereby take place. In order to maintain electric neutrality, an oxidation reaction takes place in the compartment in which anode (1) is placed, and a reduction reaction takes place in the compartment in which cathode (2) is placed. An electron flow is hereby generated in electric circuit (3) to which anode (1) and cathode (2) are connected. In this electric circuit (3) electric work can be performed by an electrical apparatus (4), designated symbolically here by means of a light bulb.

It has been found that, in a system also comprising monovalent anions and monovalent cations, multivalent anions and multivalent cations tend to move in the direction opposed to the gradient, i.e. from the river-water to the seawater. In order to prevent this in the shown embodiment of the device according to the invention, the anion exchange membranes and cation exchange membranes are embodied as monovalent-specific membranes. These monovalent-specific membranes have a low permeability to multivalent ions, whereby these latter cannot pass from the river-water to the seawater. This increases the potential over the dialytic cell which consists of a membrane pair of an anion exchange membrane (a) and cation exchange membrane (c) and a mass of a solution with a high electrolyte concentration (s) and a solution with a low electrolyte concentration (r).

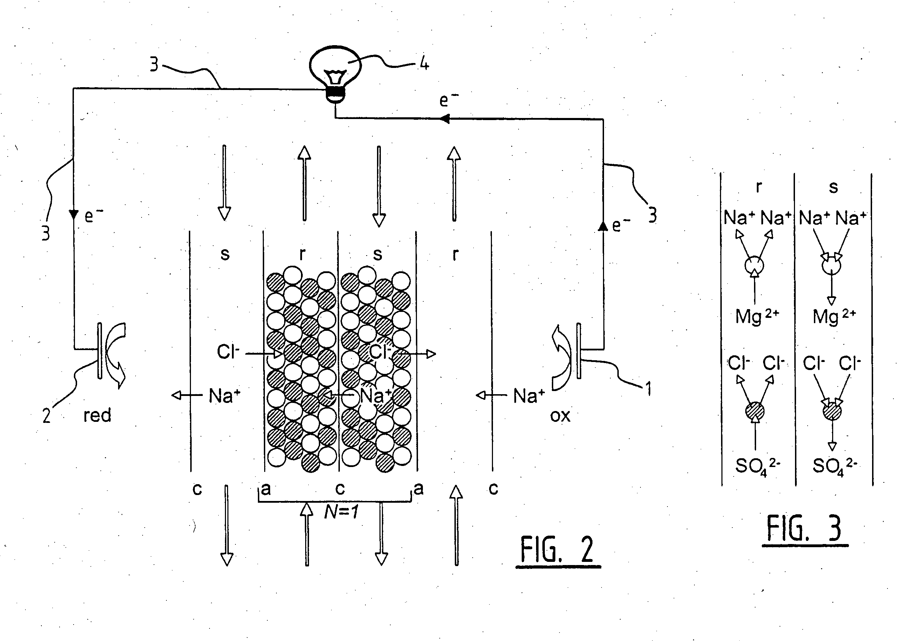

Figure 2 shows a schematic overview of another embodiment of the device according to the invention. This device makes use of anion and cation exchange resins for the purpose of absorbing multivalent ions. Elements corresponding with those of figure 1 are designated with the same reference numerals or letters. An anion exchange resin (shown schematically as hatched circles) and a cation exchange resin (shown schematically as white circles) are placed in the electrolyte compartments. For the sake of convenience figure 2 shows only the placing of the anion and cation exchange resin in two adjacent electrolyte compartments. In practice however, the anion and cation exchange resins will generally be placed in all electrolyte compartments.

The operation of the anion and cation exchange resin is shown schematically in figure 3. As shown in figure 3, multivalent ions (here SO₄²⁻ ) are bonded to the anion exchange resin in an electrolyte compartment with a low-osmotic electrolyte solution (r), and monovalent ions (here Cl⁻) are relinquished. In the case of the cation exchange resin, bonded monovalent cations (here Na⁺) are exchanged for multivalent cations (here Mg²⁺). Owing to the bonding of the multivalent cations, their concentration in the low-osmotic electrolyte solution is decreased. Multivalent anions and multivalent cations are hereby available to a lesser extent in free form, whereby they can pass to a lesser extent to the high-osmotic electrolyte solutions.

The reverse process can take place in the electrolyte compartments in which high-osmotic electrolyte solutions are present, whereby the anion and cation exchange resins can be regenerated. During this process of regeneration multivalent cations (here Mg²⁺) are exchanged for monovalent cations (here Na⁺) on the cation exchange resin. Multivalent anions (here SO₄²⁻) are exchanged for monovalent anions (here Cl⁻) on the anion exchange resin. The high-osmotic electrolyte solution can in this way be applied to regenerate the anion and cation exchange resin.

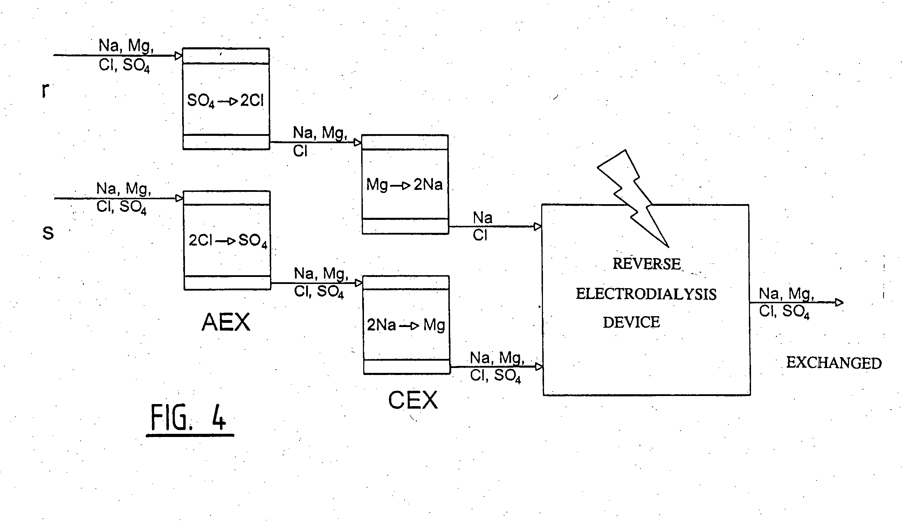

Figure 4 shows a schematic overview of an alternative embodiment of the device according to the invention. In this embodiment the cation exchange resin (CEX) and anion exchange resin (AEX) are placed in compartments in the inflow of the low-osmotic electrolyte solution to the electrolyte compartments. In the shown embodiment the anion exchange resin and cation exchange resin are here placed in separate compartments. It is however also possible to combine the anion and cation exchange resins in a single compartment in the inflow of the low-osmotic electrolyte solution to the electrolyte compartments. In the shown embodiment anion and cation exchange resins are also regenerated by bringing them into contact with the high-osmotic electrolyte solution. By reversing the inflow of the low-osmotic electrolyte solution and the high-osmotic electrolyte solution the anion and cation exchange resins can thus be used to absorb multivalent ions (in the situation where they are brought into contact with a low-osmotic electrolyte solution) and be regenerated (if they are brought into contact with the high-osmotic electrolyte solution).

### Test setup

The test setup consisted of two stacks with an active area of 100 cm²/membrane. Each stack consisted of four cell pairs. Commercially obtainable membranes were used. One stack comprised regular ion exchange membranes (Neosepta CMX/AMX, Tokuyama Co.), the other stack comprised monovalent-selective membranes (Neosepta CMS/AMS, Tokuyama Co.). These membranes have similar specifications and differ only in their specificity for monovalent ions. The membranes were separated from each other by means of PP spacers with a thickness of 1 mm. The spacers were placed inside a gasket of synthetic rubber (Neoprene®, Dupont Chemical). Mixed electrolyte solutions of sodium chloride and magnesium sulphate were circulated through the compartments (formed by these gaskets and spacers) and vessels with a batch volume of about 100 litres. The electrode system consisted of an anode compartment, a cathode compartment and protective cation exchange membranes. In this test titanium electrodes with a ruthenium/iridium mixed metal oxide coating were applied as both anode and cathode, with a projected area of 100 cm². A resistance of 10 Ω was applied in the electric circuit. The potential (open circuit as well as potential over the resistance) was measured with a Fluke multimeter. Anions were analyzed with ion chromatography.

### Results

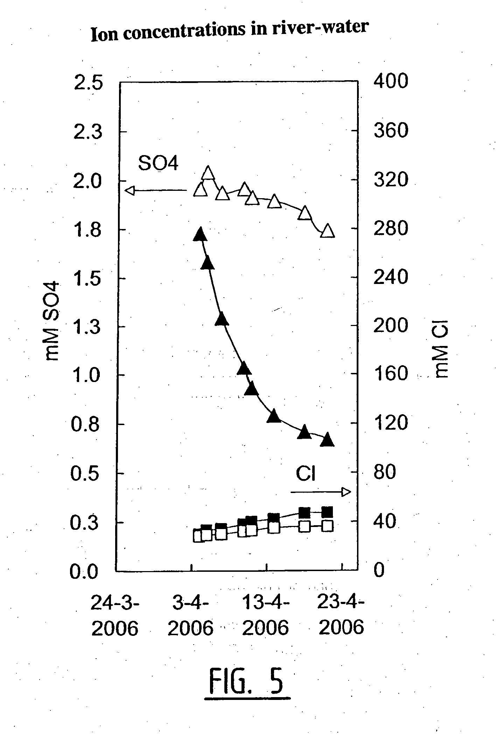

The ion transport was measured during the batch experiment. Figure 5 shows the change in anion concentration in river-water (the low-osmotic electrolyte solution). The stack with normal ion exchange membranes showed an increase in chloride ions (black squares). This accords with the principle of reverse electrodialysis, since as a result of the concentration gradient over the anion exchange membranes chloride ions are supplied from the seawater (the high-osmotic electrolyte solution). However, the sulphate concentration displayed a decrease (black triangles). This means that sulphate is transported from river-water to seawater, although the concentration of sulphate in seawater was higher than the sulphate concentration in river-water. This is the reverse transport. The stack with monovalent-selective ion exchange membranes also showed the expected increase in chloride ions (white squares). However, the sulphate concentration remained substantially constant. This means that sulphate was not transported.

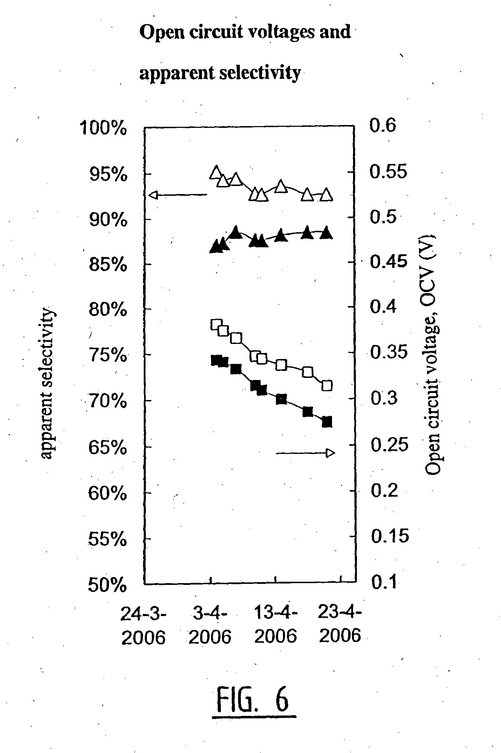

At the same time the open circuit voltage of the stack was measured (figure 6). This open circuit stack voltage was about 10-20% lower for the stack with normal membranes (black squares) compared to the stack with monovalent-selective membranes (white squares), although the initial solution had the same composition. As the experiment progresses, it is no longer possible to directly compare the open circuit stack voltages with each other. This is because the change in compositions is not the same (chloride increases for instance more quickly in the low-osmotic electrolyte solution for the stack with the normal membranes compared to the stack with the monovalent-selective membranes). An apparent selectivity is therefore introduced. The apparent selectivity is defined as the measured stack voltage divided by a calculated voltage, wherein the calculated voltage is the sum of the Nernst potentials on the basis of the conductivity of the solutions. The apparent selectivity of the monovalent-selective membranes (white triangles) was initially about 95%, while the apparent selectivity of the normal membranes (black triangles) was initially about 85%. The apparent selectivity of the membranes of both stacks decreases in time, although during the duration of the experiment the apparent selectivity for the monovalent-selective membranes remained higher than the apparent selectivity for the regular membranes.

## Claims

1. Device for performing a reverse electrodialysis process to generate electric energy, the device comprising:
(i) a number of anode compartments provided with an anode (1) which is placed in an anode fluid comprising reagents for an oxidation reaction;
(ii) a number of cathode compartments separated from the anode compartments and provided with a cathode (2) which is placed in a cathode fluid comprising reagents for a reduction reaction;
(iii) a number of cation exchange membranes (c) and anion exchange membranes (a) placed alternately between the cathode and anode, wherein compartments, the electrolyte compartments, are formed between the cation exchange membranes (c) and anion exchange membranes (a);
(iv) low-osmotic electrolyte solutions (r) with low electrolyte concentrations and high-osmotic electrolyte solutions (s) with electrolyte concentrations higher than the low-osmotic electrolyte solutions, which high-osmotic and low-osmotic electrolyte solutions are placed alternately in the electrolyte compartments;
wherein the electrolyte compartments are alternately filled with low-osmotic and high-osmotic electrolyte solutions,
**characterized in that** the device comprises means to limit transport of multivalent ions from the low-osmotic electrolyte solutions to the high-osmotic electrolyte solutions, the means involving removal of multivalent ions from the low-osmotic electrolyte solutions, or adapting the cation and anion exchange membranes such that transport of multivalent ions from the low-osmotic electrolyte solutions to the high-osmotic electrolyte solutions is limited.

2. Device as claimed in claim 1, wherein the means for limiting transport of multivalent ions from the low-osmotic electrolyte solutions to the high-osmotic electrolyte solutions are formed by embodying a number of cation exchange membranes (c) and a number of anion exchange membranes (a) as monovalent-selective membranes.

3. Device as claimed in claim 1 or 2, wherein the means for removing multivalent ions from the low-osmotic electrolyte solutions comprise anion and/or cation exchange resins, which anion and/or cation exchange resins can exchange monovalent anions and monovalent cations for respectively multivalent anions and multivalent cations.

4. Device as claimed in claim 1, 2 or 3, wherein the anion and/or cation exchange resins are placed in the electrolyte compartments.

5. Device as claimed in claim 3, wherein anion and/or cation exchange resins are placed in the inflow of low-osmotic electrolyte solutions to electrolyte compartments.

6. Method for generating electric energy, comprising the steps of:
(i) providing a device as claimed in any of the claims 1-5;
(ii) allowing the low-osmotic and high-osmotic electrolyte solutions to flow through the electrolyte compartments;
(iii) electrically connecting the anode and the cathode.

7. Method as claimed in claim 6, wherein the device is a device as claimed in any of the claims 3-6, and wherein the anion and/or cation exchange resins are periodically regenerated by exchanging monovalent anions and monovalent cations for respectively multivalent anions and multivalent cations bonded to the anion and/or cation exchange resins.

8. Method as claimed in claim 7, wherein the anion and/or cation exchange resins are regenerated by bringing them into contact with a high-osmotic electrolyte solution, preferably selected from ocean water, seawater or concentrates thereof.

## Patentansprüche

1. Vorrichtung zum Durchführen eines Rückwärts-Elektrodialyseprozesses zum Erzeugten von elektrischer Energie, wobei die Vorrichtung umfasst:
(i) eine Anzahl von Anodenkammern, ausgestattet mit einer Anode (1), die in einer Anodenflfissigkeit platziert ist, die Reaktanten für eine Oxidations-Reaktion umfasst;
(ii) eine Anzahl von Kathodenkammern, getrennt von den Anodenkammem und ausgestattet mit einer Kathode (2), die in einer Kathodenflüssigkeit platziert ist, die Reaktanten für eine Reduktions-Reaktion umfasst;
(iii) eine Anzahl von Kationen-Austausch-Membranen (c) und Anionen-Austausch-Membranen (a), die abwechselnd zwischen Kathode und Anode platziert sind, wobei die Kammern, die Elektrolytkammern, zwischen den Kationen-Austausch-Membranen (c) und den Anionen-Austausch-Membranen (a) ausgebildet sind;
(iv) Niederosmotische Elektrolytlösungen (r) mit niedrigen Elektrolytkonzentrationen und hochosmotische Elektrolytlösungen (s) mit Elektrolytkonzentrationen höher als die niederosmotischen Elektrolytlösungen, welche hochosmotischen und niederosmotischen Elektrolytlösungen abwechselnd in den Elektrolykammern platziert sind;
wobei die Elektrolytkammem abwechselnd mit niederosmotischen und hochosmotischen Elektrolytlösungen gefüllt sind,
**dadurch gekennzeichnet**, das die Vorrichtung Mittel umfasst, um den Transport von mehrwertigen Ionen von den niederosmotischen Elektrolytlösungen zu den hochosmotischen Elektrolytlösungen zu begrenzen, wobei die Mittel das Entfernen von mehrwertigen Ionen aus den niederosmotischen Elektrolytlösungen, oder das Anpassen der Kationen- und Anionen-Austausch-Membrane derart, dass der Transport von mehrwertigen Ionen von den niederosmotischen Elektrolytlösungen zu den hochosmotischen Elektrolytlösungen begrenzt ist, beinhalten.

2. Vorrichtung, wie in Anspruch 1 beansprucht, wobei die Mittel zum Begrenzen des Transports von mehrwertigen Ionen von den niederosmotischen Elektrolytlösungen zu den hochosmotischen Elektrolytlösungen ausgebildet werden durch die Verkörperung von einer Anzahl von Kationen-Austausch-Membranen (c) und einer Anzahl von Anionen-Austausch-Membranen (a) als einwertig-selektive Membranen.

3. Vorrichtung, wie in Anspruch 1 oder 2 beansprucht, wobei die Mittel zum Entfernten von mehrwertigen Ionen aus den niederosmotischen Eiektrolyttösungen Anionen- und/oder Kationen-Atistausch-Beschichtugen umfasst, welche Anionen- und /oder Kationen-Austausch-Beschichtungen einwertige Anionen und einwertige Kationen mit entsprechenden mehrwertigen Anionen und mehrwertigen Kationen austauschen können.

4. Vorrichtung, wie in Anspruch 1, 2 oder 3 beanspnucht, wobei die Anionen- und/oder Kationen-Austausch-Beschichtungen in den Elektrolytkammem platziert sind.

5. Vorrichtung, wie in Anspruch 3 beanspnucht, wobei Anionen- und/oder Kationen-Austausch-Beschichtungen im Zufluss der niederosmotischen Elektrolytlösungen in die Elektrolytkammern platziert sind.

6. Verfahren zum Erzeugen von elektrischer Energie, umfassend die Schritte:
(i) Bereitstellen einer Vorrichtung, wie in einem der Ansprüche 1-5 beansprucht;
(ii) es den niederosmotischen und hochosmotischen Elektrolytlösungen zu ermöglichen, durch die Elektrolytkammern zu fließen;
(iii) elektrisches Verbinden der Anode und der Kathode.

7. Verfahren, wie in Anspruch 6 beansprucht, wobei die Vorrichtung eine Vorrichtung wie in einem der Ansprüche 3-6 beansprucht, ist, und wobei die Anionen- und/oder Kationen-Austausch-Beschichtungen periodisch regeneriert werden durch das Austauschen von einwertigen Anionen und einwertigen Kationen mit entsprechenden mehrwertigen Anionen und mehrwertigen Kationen, die an die Anionen- und/oder Kationen-Austausch-Beschichtungen gebunden sind.

8. Verfahren, wie in Anspruch 7 beansprucht, wobei die Anionen- und/oder Kationen-Austausch-Beschichtungen regeneriert werden, in dem man sie in Kontakt bringt mit einer hochosmotischen Elektrolytlösung, bevorzugt ausgewählt aus Ozeanwasser, Meerwasser oder Konzentraten davon.

## Revendications

1. Dispositif d'exécution d'un processus d'électrodialyse inverse pour générer une énergie électrique, le dispositif comprenant :
(i) un certain nombre de compartiments d'anode pourvus d'une anode (1) qui est placée dans un fluide d'anode comprenant des réactifs pour une réaction d'oxydation ;
(ii) un certain nombre de compartiments de cathode séparés des compartiments d'anode et pourvus d'une cathode (2) qui est placée dans un fluide de cathode comprenant des réactifs pour une réaction de réduction ;
(iii) un certain nombre de membranes d'échange de cations (c) et de membranes d'échange d'anions (a) placées alternativement entre la cathode et l'anode, dans lequel des compartiments, les compartiments d'électrolyte, sont formés entre les membranes d'échange de cations (c) et les membranes d'échange d'anions (a) ;
(iv) des solutions d'électrolyte faiblement osmotiques (r) avec de faibles concentrations d'électrolyte et des solutions d'électrolyte fortement osmotiques (s) avec des concentrations d'électrolyte supérieures à celles des solutions d'électrolyte faiblement osmotiques, lesquelles solutions d'électrolyte fortement osmotiques et faiblement osmotiques sont placées alternativement dans les compartiments d'électrolyte ;
dans lequel les compartiments d'électrolyte sont remplis alternativement de solutions d'électrolyte faiblement osmotiques et fortement osmotiques,
**caractérisé en ce que** le dispositif comprend des moyens pour limiter le transport d'ions multivalents des solutions d'électrolyte faiblement osmotiques vers les solutions d'électrolyte fortement osmotiques, les moyens impliquant le retrait des ions multivalents des solutions d'électrolyte faiblement osmotiques, ou l'adaptation des membranes d'échange de cations et d'anions de sorte que le transport des ions multivalent des solutions d'électrolyte faiblement osmotiques, vers les solutions d'électrolyte fortement osmotiques soit limité.

2. Dispositif selon la revendication 1, dans lequel les moyens pour limiter le transport des ions multivalents des solutions d'électrolyte faiblement osmotiques vers les solutions d'électrolyte fortement osmotiques sont formés en mettant en oeuvre un certain nombre de membranes d'échange de cations (c) et un certain nombre de membranes d'échange d'anions (a) en tant que membranes sélectives des éléments monovalents.

3. Dispositif selon la revendication 1 ou 2, dans lequel les moyens pour retirer les ions multivalents des solutions d'électrolyte faiblement osmotiques comprennent des résines d'échange d'anions et/ou de cations, lesquelles résines d'échange d'anions et/ou de cations peuvent échanger les anions monovalents et les cations monovalents respectivement contre des anions multivalents et des cations multivalents.

4. Dispositif selon la revendication 1, 2 ou 3, dans lequel les résines d'échange d'anions et/ou de cations sont placées dans les compartiments d'électrolyte.

5. Dispositif selon la revendication 3, dans lequel les résines d'échange d'anions et/ou de cations sont placées dans le flux d'entrée de solutions d'électrolyte faiblement osmotiques, vers les compartiments d'électrolyte.

6. Procédé de génération d'énergie électrique, comprenant les étapes consistant à :
(i) fournir un dispositif selon l'une quelconque des revendications 1 à 5 ;
(ii) permettre aux solutions d'électrolyte faiblement osmotiques et fortement osmotiques de s'écouler à travers les compartiments d'électrolyte ;
(iii) connecter électriquement l'anode et la cathode.

7. Procédé selon la revendication 6, dans lequel le dispositif est un dispositif selon l'une quelconque des revendications 3 à 6, et dans lequel les résines d'échange d'anions et/ou de cations sont régénérées périodiquement en échangeant les anions monovalents et les cations monovalents respectivement contre des anions multivalents et des cations multivalents liés aux résines d'échange d'anions et/ou de cations.

8. Procédé selon la revendication 7, dans lequel les résines d'échange d'anions et/ou de cations sont régénérées en les amenant en contact avec une solution d'électrolyte fortement osmotique, de préférence sélectionnée parmi l'eau de l'océan, l'eau de mer, ou des concentrés de celles-ci.
